# EUROPEAN PATENT SPECIFICATION

(11) **EP 2 379 904 B1**
(45) Date of publication and mention of the grant of the patent: **26.02.2014**
(21) Application number: 08875092.2
(22) Date of filing: 17.12.2008
(51) Int. Cl.: F16C 33/10, F16C 9/04

(54) **HYDRODYNAMIC BEARING FOR AN INTERNAL COMBUSTION ENGINE**
HYDRODYNAMISCHES LAGER FÜR EINEN VERBRENNUNGSMOTOR
PALIER HYDRODYNAMIQUE POUR MOTEUR À COMBUSTION INTERNE

(43) Date of publication of application: 26.10.2011
(73) Proprietor: MAHLE International GmbH, 70376 Stuttgart (DE)
(72) Inventor: ZOTTIN, Walter, 03461-030 Vila Formosa, Sao Paulo SP (BR); TOLEDANO, Reinaldo, 13290-000 Louveira - SP (BR); FERREYRA, Sergio, Adrian, 03202-000 Vila Bela, SP (BR); BONVENTI, Carlos, Eduardo, 13280-000 Vinhedo, SP (BR)
(74) Representative: Pohle, Reinhard
(86) International application number: PCT/EP2008/010760
(87) International publication number: WO 2010/069342

(56) References cited:
- EP-A- 0 422 321
- EP-A- 1 911 986
- DE-A1- 19 953 576
- DE-C- 825 779
- US-A- 5 607 239
- US-A- 6 082 904
- US-A1- 2005 196 085
- US-A1- 2005 213 859

## Description

The present invention relates to a hydrodynamic bearing for an internal combustion engine. More particularly, the present invention relates to a bearing composed of a sliding material wherein its mean roughness depth (Rz), hereinafter referred to as average maximum roughness, leads to an accelerated accommodation of a crankshaft during engine operation. The proposed roughness value (Rz) leads to an accelerated wear of the sliding material.

The present invention also relates to an engine block and to a connecting rod for an internal combustion engine having at least one hydrodynamic bearing as described above.

Additionally, the present invention relates to an internal combustion engine having at least one hydrodynamic bearing as described above.

### BACKGROUND OF THE INVENTION

It is known that in an internal combustion engine (IC), like two-stroke engines and four-stroke engines (Otto/Diesel cycles), the power is transmitted to a shaft, also called crankshaft, through a connecting rod or a piston rod, in order to produce its rotation. In this case, the linear movement of a piston is converted into a rotation movement of the crankshaft during the "explosion" stroke of the engine.

The connecting rods, for example, are made of steel, cast iron or titanium alloys, among others. Said assemblies comprise hydrodynamic bearings that can reduce the friction between the crankshaft and a connecting rod during engine operation. In the same manner, hydrodynamic bearing are provided between the main bearings of an engine block (which constrict the crankshaft) and the shaft itself.

The rotation of a crankshaft occurs by a connecting rod, who converts the linear movement of the piston in a rotation.

The hydrodynamic bearings are dynamic bearings wherein the fluid lubricant is a liquid (a lubricant oil), which avoid the direct contact between the surfaces of the rotatable axle and the support. The axle 'floats' by the effect of the hydrodynamic pressure of the oil film, avoid touching the surface of the bearing, thus reducing enormously the wear between said components.

Usually, the hydrodynamic bearings are made of bronze alloy or an aluminum alloy. The hydrodynamic bearings made of aluminum alloy are called bimetallic bearings, while the hydrodynamic bearings made of bronze alloy are called by trimetallic bearings.

The bimetallic bearings are employed in four-stroke engines for a long time ago in motor vehicles. An IC engine is responsible for a wide number of applications, involving cars, trucks, motorcycles, crafts and many others.

Nowadays, the operation of an internal combustion engine is well known and its behavior is related to the project parameters and loads involved. In some applications, where the engines operate under high loads, it is very important to know the mechanical constraints of the components installed in the engine and its work structure.

At the last decades, many engineers and researchers have worked hard in order to improve the reliability and durability of the internal combustion engines, including the resistance with respect to the radial movement of the crankshaft. Some kind of problems have been studied and evaluated in order to predict failures and eventual drawbacks, and hence some solutions for improvement in efficiency and durability were developed.

The US patent 4,384,555 relates to an internal combustion engine, and more particularly to the lubrication and cooling of the cap side of the larger end portion of a connecting rod. In this case, the end portion is connected to the crankshaft, in engines of the type which do not employ a pressurized lubricating system, such as in a small two-stroke outboard engine.

In other words, the patent US 4,384,555 provides one or more improved lubricating holes at the cap side of the larger end portion of a connecting rod of an internal combustion engine.

It is important to note that the lubricant holes described in the US patent 4,384,555 are similarly provided with trapping grooves.

The patent US 4,396,309 refers to connecting rods for internal combustion engines, and particularly to the attachment of the connecting rod cap to the connecting rod.

As already mentioned in the patent US 4,396,309, proper alignment of the connecting rod and connecting rod cap is important since it determines the alignment of the two internal bearings surfaces of the crankshaft end of the connecting rod.

The patent US 5,036,727 relates to connecting bolts for connecting together a connecting rod assembly such as for use in an internal combustion engine. In this case, a connecting rod assembly comprising a connecting rod having a rod lug and a bolt comprising a shank having an enlarged portion and a pilot portion.

The invention described in the patent US 5,036,727 shows that the connecting rod assembly comprises a connecting rod having a curved rod bearing surface having a rod lug formed thereon, and a connecting rod cap having a curved cap bearing surface and a cap lug attached thereto.

The patent case JP 2003322139 relates to a crankshaft bearing structure and a manufacturing method capable of decreasing a difference in thermal expansion coefficient with a crankshaft and having excellent cutting performance.

The Japanese document JP 2003322139 claims in particular a manufacturing method of a crankshaft bearing made from aluminum comprising the casting of a ceramic compact and the forming of a metal matrix composite whose coefficient of thermal expansion is smaller than an aluminum material.

In this case, as defined in JP 2003322139 document, the crankshaft bearing structure prevents, for example, an increase of noise and an oil pressure fall during machine operation.

The patent case JP 2006177461 refers to slide bearing structure in order to maintain the performance of a slide bearing at a high level by preventing deformation of a bearing metal.

More particularly, the Japanese document JP 2006177461 proposes a half-split bearing metals assembled in a journal bore, formed by a cylinder block and a bearing cap. In this case, a crank journal of a crankshaft is rotatably supported by the slide bearing formed with the bearings metals in a pair. The patent case JP 2006177461 achieves its objectives by adjusting the bearing structure to rotation of a crankshaft.

Other prior art documents show a particular interest related to a sliding surface and its wear during the internal combustion engine operation as follows.

The patent US 6,695,482 relates to a half bearing composed by a cylindrical plain bearing for supporting a shaft for rotation when two of the half bearings are combined together. In this document, the half bearing has two circumferential ends each of which has a plurality of circumferential grooves without formation of any crush relief surface. The grooves extend substantially over an overall circumferential dimension of the half bearing and include portions located at both circumferential ends of the half bearing respectively.

Each portion has a larger axially sectional area than the grooves formed in a portion of the half bearing mainly subjected to load during rotation of the shaft. The aforesaid crush relief surfaces prevent the shift of the joints and the local contact. The solution shown on the patent case US 6,695,482 avoids the leakage of the lubricant oil in case of marginal lubrication.

The patent case US 20040228554 relates to a sliding member having the property of improved conformability of its sliding surface in an early state of sliding. In this case, a plurality of holes are formed on a sliding surface, and the diameters (or the opening area) of the holes on the sliding surface are arranged so as to become gradually large as it gets closer to both ends in an axial direction from the center side in the axial direction. According to patent document US 20040228554, the pressurized area decreases as it gets closer to the ends of the sliding surface so that it wears at an early stage.

The patent document JP 2005256966 relates to a sliding bearing capable of appropriately maintaining an lubricating oil film between the sliding bearing and a shaft, even when a deformation due to high oil-film pressure is generated near a central part of the sliding bearing. the revealed sliding bearing comprises a central part having projecting parts that are worn in early stage, enabling the formation of a desired oil film that can be thereby appropriately maintained over the whole between the sliding bearing and the shaft.

The patent case US 20050196085 relates to a sliding member such as a slide bearing, to a manufacturing method and to a manufacturing apparatus of the same. This invention can make a height of a bank portion around an oil keeping concave portion small, whereby it is possible to improve an initial conformability and improve an anti-seizure performance. According to the US 20050196085 document, a plurality of holes are formed on a slide surface with respect to an opposing member by a fiber laser apparatus.

The patent case US 20050201647 relates to a half plain bearing which can minimize lubricant leakage while retaining a crush relief function, comprising grooved portions formed circumferentially on an inner surface of the half plain bearing, wherein the grooved portions have protrusions in secondary loaded portions which are liable to running-in wear caused by contact with a shaft.

The patent case US 20050213859 relates to a sliding bearing which can continuously enhance conformability even when deformations by high oil film pressure in the vicinity of a central part of the sliding bearing occur. In this case, the sliding bearing includes crownings, each being formed in an inclined shape toward an outer peripheral surface from an inner peripheral surface of a sliding bearing.

The patent case EP 1584828 relates to a sliding bearing composed by a MoS₂ layer as a solid lubricant and PAI resin as a binder resin. This document discloses a sliding surface configured by grooves and annular projections in order to allow a lubricant oil to be secured in recesses of the uneven configuration, allowing a seizure resistance to be improved.

The patent case JP 2006070838 relates to a sliding surface of sliding member composed by convex portions and concave portions. Those convex portions are formed by directly quenching the sliding surface of the sliding member in a line shape or a dot shape, and concave portions are formed in indirectly quenched portions adjacent to the directly quenched portions. This approach allows to a improved seizure resistance.

The patent case EP 0422321 relates to a sliding bearing with a lining forming grooves, a bonding layer formed on the lining and an overlay formed on the bonding layer. When the overlay wears out, not only the bonding layer but the overlay, bonding layer and lining are intermittently exposed to sliding contact, allowing a seizure resistance to be improved.

It is important to note that all the above mentioned prior art documents do not present an effective solution to the stress caused in the bearings during the engine operation due to the high oil press values, specially with regard to the peak oil pressure and the effective possibility of the use of the bimetallic bearings in high loaded engines.

The present invention provides a hydrodynamic bearing which leads less stress for the IC operation, mainly during the first hours of operation, improving the durability of the bearings, guaranteeing the supply of a safe oil film thickness and/or enabling the use of a cheaper/less stress resistant bearings without loss of useful life.

In order to achieve the above mentioned properties, the present invention provides a hydrodynamic bearing for an internal combustion engine and, as already mentioned, a bearing for main bearings or for a connecting rod, composed of a sliding material having a surface roughness value (Rz) to enable an accelerated accommodation of a crankshaft during the first hours of operation of the engine, reducing the pressure of the oil film and, consequently, increasing the useful life of the bearings.

### OBJECTIVES OF THE INVENTION

A first objective of the present invention is to provide a hydrodynamic bearing for an internal combustion engine composed of a sliding material, wherein a higher maximum roughness value (Rz) of its surface leads to an accelerated accommodation of a crankshaft during the first hours of operation of the engine, reducing the pressure of the oil film and, consequently, increasing the useful life of the bearings.

It is also an objective of the present invention to provide an engine block for an internal combustion engine having at least one hydrodynamic bearing as described above.

It is also an objective of the present invention to provide a connecting rod for an internal combustion engine having at least one hydrodynamic bearing as described above.

A further objective of the present invention is to provide an internal combustion engine having at least one hydrodynamic bearing as described above.

### BRIEF DESCRIPTION OF THE INVENTION

The objectives of the present invention are achieved by means of a hydrodynamic bearing for an internal combustion engine, as defined in claim 1.

Finally, the objectives of the present invention are achieved by means of an engine block, a connecting rod and an internal combustion engine that comprise at least one hydrodynamic bearing above defined.

### BRIEF DESCRIPTION OF THE DRAWINGS

Figure 1 - is a perspective view of a connecting rod showing a hydrodynamic bearing object of the present invention;
Figure 2 - is a schematic perspective view of the hydrodynamic bearing according to the teachings of the present invention;
Figure 3 - is a schematic view of the hydrodynamic bearing, object of the present invention, showing an oil contact portion where it suffers the higher compression load;
Figure 4 - is a schematic view of the hydrodynamic bearing behavior (high roughness) of the present invention showing the wear of the sliding material in the oil contact portion wherein suffers a higher compression load;
Figure 5 - is a schematic graph of the roughness parameters according to the teachings of the present invention;
Figure 6 - is a perspective view of the oil pressure profile according to the hydrodynamic bearing of the present invention in comparison to the oil pressure profile of the hydrodynamic bearing of prior art;
Figure 7 - is a graph illustrating the value of the peak oil pressure of the hydrodynamic bearing according to the teachings of the present invention and the peak oil pressure of the hydrodynamic bearing of prior art;
Figure 8 - is a perspective view of the oil film thickness according to the hydrodynamic bearing of the present invention in comparison to the oil film thickness of the hydrodynamic bearing of prior art;
Figure 9 - is a graph illustrating the value of the oil film thickness according to the hydrodynamic bearing of the present invention compared with the value of the oil film thickness of the hydrodynamic bearing of prior art;
Figure 10 - is a perspective view of an engine block object of the present invention, including the main bearings and the main bearing caps;
Figure 11 - is a perspective view of the assembly comprised of one main bearing and its correspondent main bearing cap;
Figure 12 - is a perspective view of a crankshaft of a in line 6-cylinder engine;
Figure 13 - is a lateral view of the crankshaft illustrated in figure 12;
Figure 14 - is a front view of the crankshaft illustrated in figures 12 and 13;
Figure 15 - is a comparative view of the main bearings of an in line 6-cylinder engine using the hydrodynamic bearings object of the present invention, concerning the journal orbit; and
Figure 16 - is a comparative view of the main bearings of an in line 6-cylinder engine using the hydrodynamic bearings object of the present invention, concerning the direct contact reaction severity.

### DETAILED DESCRIPTION OF THE DRAWINGS

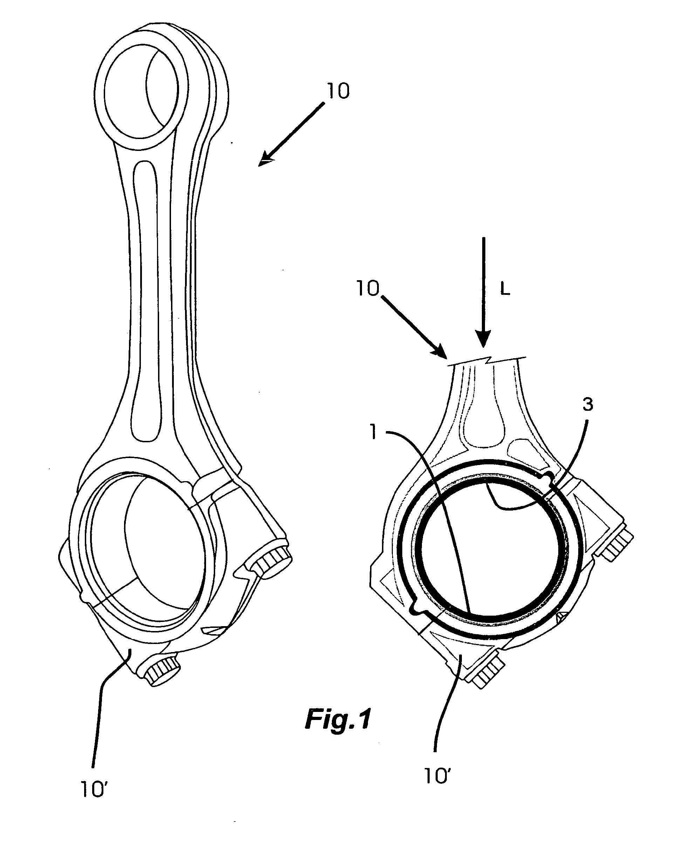

As can be seen from figure 1, a hydrodynamic bearing 1 is usually applied in an engine bearing in order to reduce the friction and the superficial wear of the rigid pieces working in relative movement.

In an internal combustion engine (not shown), a hydrodynamic bearing 1 is responsible for reducing, for example, the friction between a crankshaft 30 and connecting rods 10, or between the crankshaft and the main bearings 11, during engine operation.

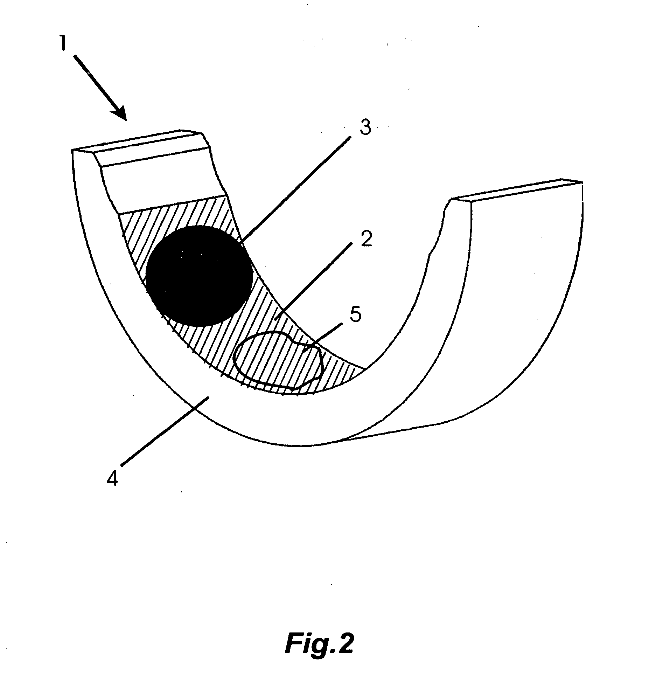

Figure 2 shows a hydrodynamic bearing for an internal combustion engine 1 according to the teachings of the present invention. As already mentioned, the present invention relates to a new and inventive hydrodynamic bearing 1 and to an IC engine having at least one of said hydrodynamic bearings 1.

The hydrodynamic bearing assembly to be installed in an IC engine comprises two hydrodynamic bearings itself, each one in the form of a semi circle ("C" shaped) combined/aligned in opposite direction forming a hole into where the crankshaft can rotate with respect to the rod 10 or to the main bearing 11, supported by an oil film.

A first hydrodynamic bearings is positioned adjacent to the con rod 10 or the main bearing 11 and the second hydrodynamic bearings is positioned adjacent to the rod cap 10' or the main bearing cap 11'.

In order to facilitate the description, each semi-circle that forms the hydrodynamic bearing will be called individually a hydrodynamic bearing hereon.

The hydrodynamic bearing comprises a "C" shapped base 4 has an internal surface 2 that comprises a first oil contact portion 3 who suffers a compression load. The internal surface 2 is composed of a sliding material having an average maximum roughness value (Rz) specifically determinated (and higher than in the prior art components), which leads an accelerated wear of the sliding material in the oil contact portion 3.

The first oil contact portion 3 is the region where the hydrodynamic bearing 1 suffers the higher compression load, due to the piston movement in a cylinder, especially during a power or explosion stroke. Besides the first oil contact portion 3, who suffers the higher compression load, the rest of the internal surface 2 is the so called second oil contact portion 5.

As can be seen in figure 1, when the hydrodynamic bearing 1 is a con rod bearing, the higher compression load occurs in axial alignment with respect to the linear movement L of the piston during the explosion stroke and is positioned in the first hydrodynamic bearings that is positioned adjacent to the rod (hence, the bearing compresses de crankshaft). In other words, in this situation the first oil contact portion 3 occurs in axial alignment with respect of the rod 10. Figures 1 to 9 refers to a con rod bearing.

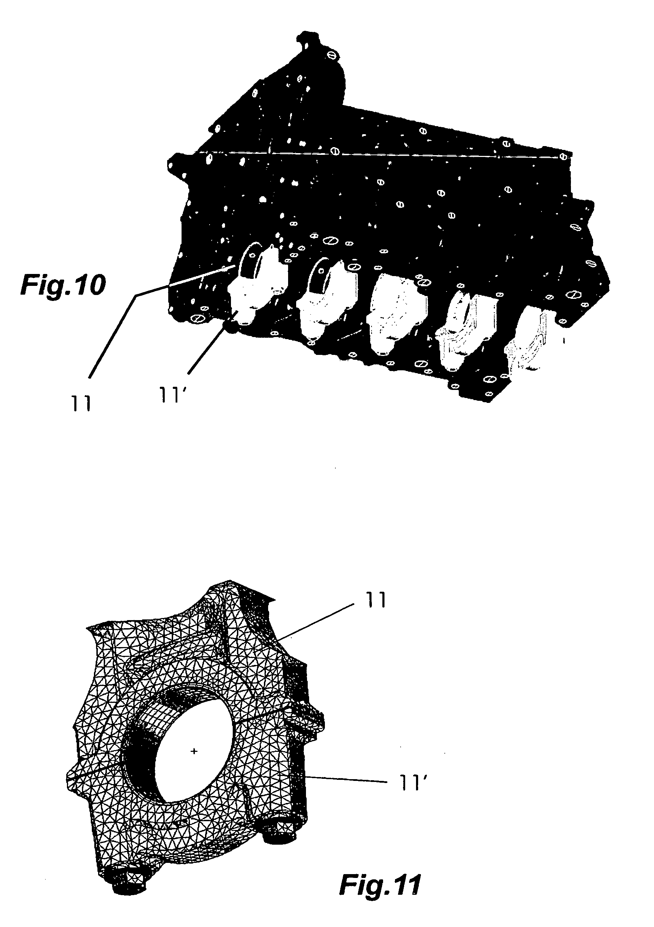

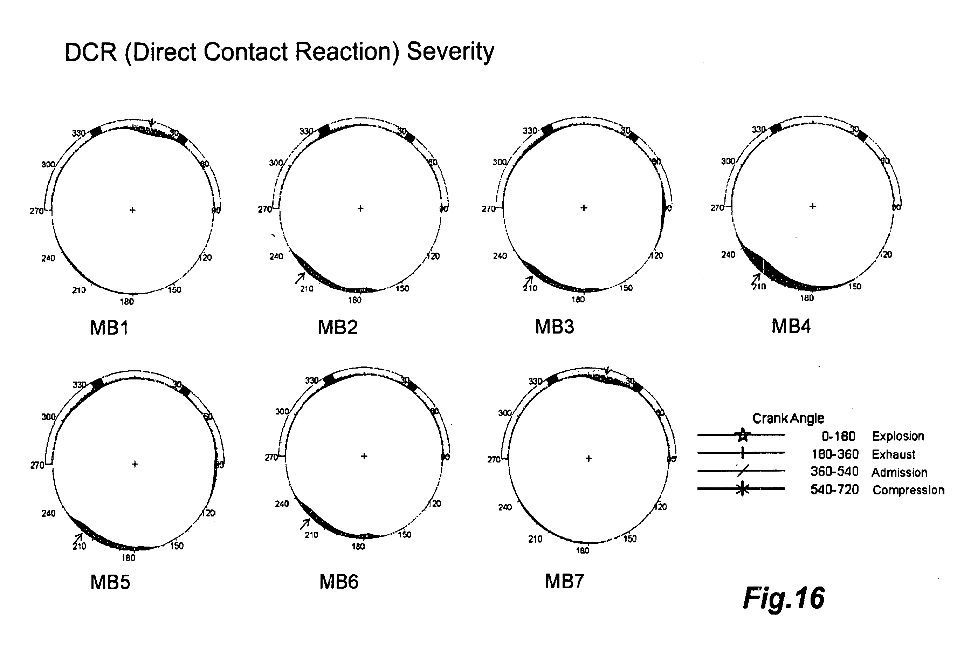

On the other hand, when the hydrodynamic bearing 1 is a crankshaft bearing, the higher compression load also occurs in axial alignment with respect to the linear movement L of the piston during the explosion stroke, but in the hydrodynamic bearings positioned adjacent to the main cap (since the crankshaft tend to compress the cap as a result of the movement of the piston(s) due to the explosion stroke). Figures 10 to 16 refers to a crankshaft bearing.

Four stroke Otto and Diesel cycle engines comprise an intake (induction) stroke, a compression stroke, an explosion stroke and an exhaust stroke. The explosion stroke is the only stroke that produces power.

Into the combustion chamber of the engine, the air-fuel mixture is ignited near the end of the compression stroke, usually by a spark plug or by the high temperature of the compressed air. The resulting pressure of burning gases pushes violently the piston inside the cylinder through the explosion stroke, and said movement is converted into a rotation of the crankshaft by means of the rod. As a result, the pressure on the bearing 1 on the first oil contact portion 3 is usually high, and higher than in other regions.

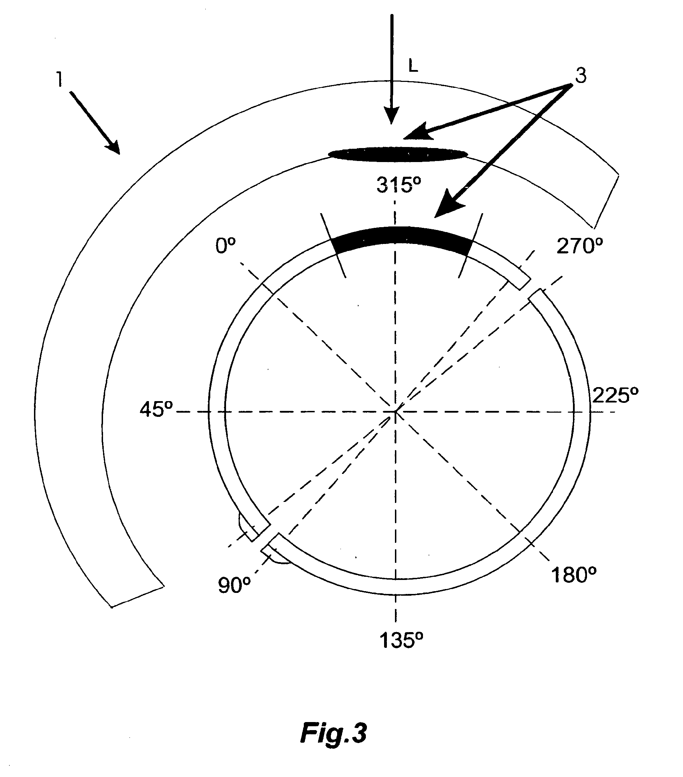

Figure 3 shows a schematic view of the hydrodynamic rod bearing 1 highlighting the first oil contact portion 3. In the pictured example, it is possible to observe the specific portion (angle of 315 degree) of the bearing 1 (in fact, the first semi-circle, the one that is adjacent to the rod), where the compression load is higher than other regions (0 or 45 degree for example). It is worth emphasizing that the oil contact portion 3 is a region which receives the load of the explosion stroke forces occurs, since it is in axial alignment with respect to the linear movement L of the piston during the explosion stroke.

Whatever the engine is, its operation causes a higher wear in the first oil contact portion which if compared to the rest of the bearing, said wear increasing as increases the time of operation of the engine during its useful life.

Nowadays, for use on high loaded Otto and Diesel engines as con rod and lower main bearings, trimetallic bearings (galvanic and sputtered overlays) are preferred. Bimetallic bearings, on the other hand, are composed by a steel layer, in order to provide a rigid contact, an intermediary layer of pure aluminum and a third layer of an alloy, in order to establish the relative piston movement in a crankshaft with a minimum friction.

Assuming that a higher roughness of the sliding material leads a quickly wear, the hydrodynamic bearing 1 object of the present invention works in order to be intentionally self-adjusted to the journal orbit of the crankshaft. Hence, the bearing is designed to provide accelerated wear of the first oil contact portion 3, which confers several technical advantages to the component when compared to the known bearings discussed above.

In other words, the present bearing 1 has an internal surface 2 which suffers an accelerated wear, due its higher roughness allowing the accommodation of a shaft (i.e. crankshaft) in an accelerated way. As will be described below, the accelerated wear occurs, mostly in the first oil contact portion 3, as a result of the rotational motion of the crankshaft.

It is important to note that the prior art bearings also suffer the wear due as a result of the shaft's rotation, however said wear is usually lower and slower in comparison to the wear of the hydrodynamic bearing of the present invention since the roughness of the internal surface of the bearing is considerably lower. Up to this moment, no one had created a bearing designed to wear rapidly and controlled, with a view to reduce the oil film pressure at the first oil contact portion 3.

According to the teachings of the present invention, the higher roughness of the internal surface 2 is able to reduce the peak oil film pressure on high loaded engines, so that bimetallic bearings (bimetal) can be used of such applications since it causes a accelerated wear of the first oil contact portion 3, increasing the volume/space between said portion and the shaft with consequent reducing in the oil pressure therebetween.

The above occurs since the increased space causes the accumulation of greater volume of oil, allowing a better distribution of the load of oil and reducing the pressure it exerts on the oil contact portion 3.

The reduced pressure causes a considerable reduction in the compression load suffered by the first oil contact portion 3 and, hence, the stress to which the bearing is submitted during the rotational motion of the crankshaft when the engine is in operation.

The accelerated wear is achieved due to the determined high roughness of said internal surface 2, whose sliding material has an average maximum roughness value (Rz) between 8 and 30 µm, comparing to a roughness value (Rz) of around 2 µm of a polished prior art bearing.

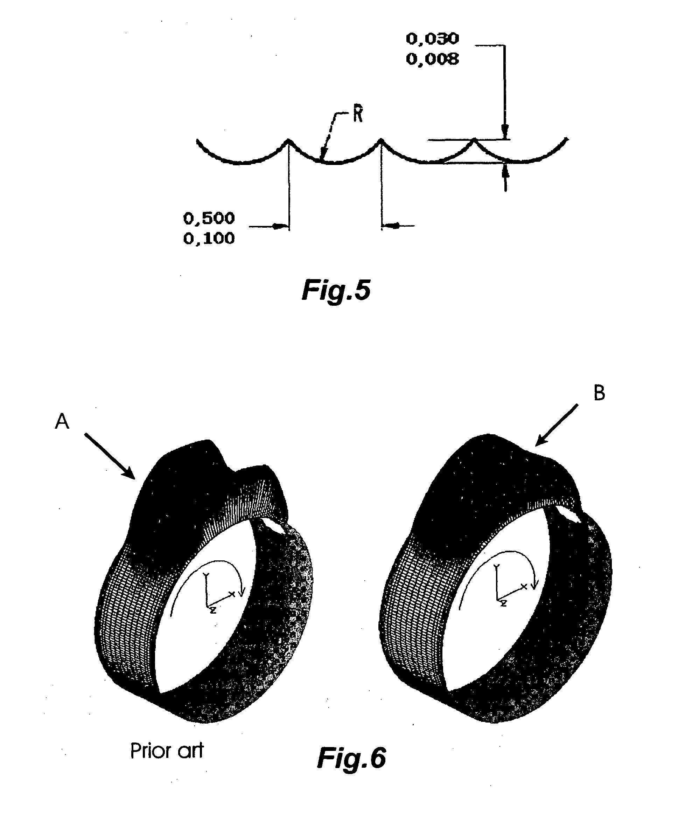

The internal surface 2 of the bearing 1 is composed of a plurality of peaks and valleys (see fig 5) in a pattern to confer a high degree of roughness. When the engine is operating, the peaks contact mechanically the surface of the shaft and suffer wear, due to the metal-to-metal contact, which generates an amount of heat The wear produced by the metal-to-metal contact quickly reduces the dimensions of the peaks and, after little time of operation, the peaks are so consumed that the contact no longer occurs. The degree of roughness is determined to avoid the generation of heat in excess, which could cause the seizure of the material.

After the consumption of the peaks, the roughness on the internal surface 2 is reduced and the space between the first oil contact portion 3 and the shaft is increased.

In other words, the accelerated wear of the sliding material in the oil contact portion 3 causes (i) the accommodation of the shaft in the internal surface 2; and (ii) an initial increasing of an oil film thickness that causes a reduced peak oil film pressure, said reduced peak oil film pressure causing a reduced stress during a shaft movement.

Hence, the internal surface 2 receives a first hydrodynamic load before the accelerated wear of the oil contact portion 3 and a second hydrodynamic load after the accelerated wear of the oil contact portion 3, where the second load is substantially lower than the first load due to the accelerated wear of the sliding material in the oil contact portion 3.

However, it is important to emphasize that the degree of roughness must be determined to avoid the generation of heat in excess, which could cause the seizure of the material.

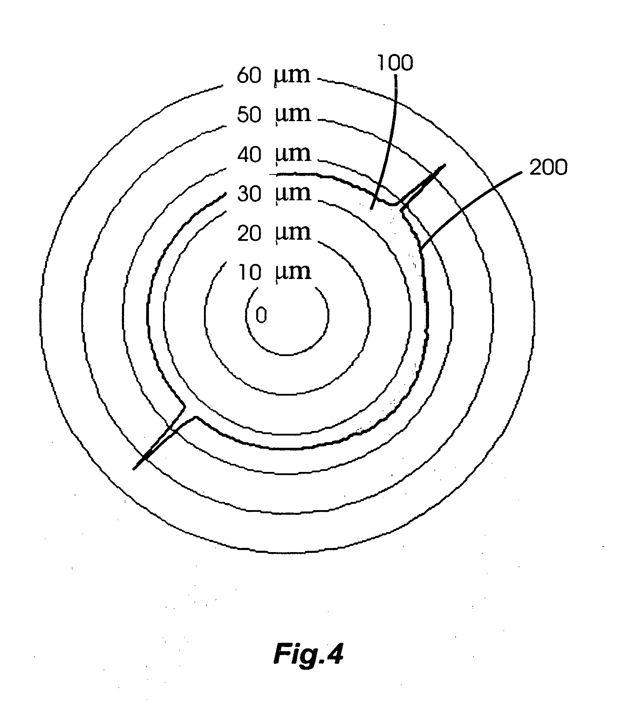

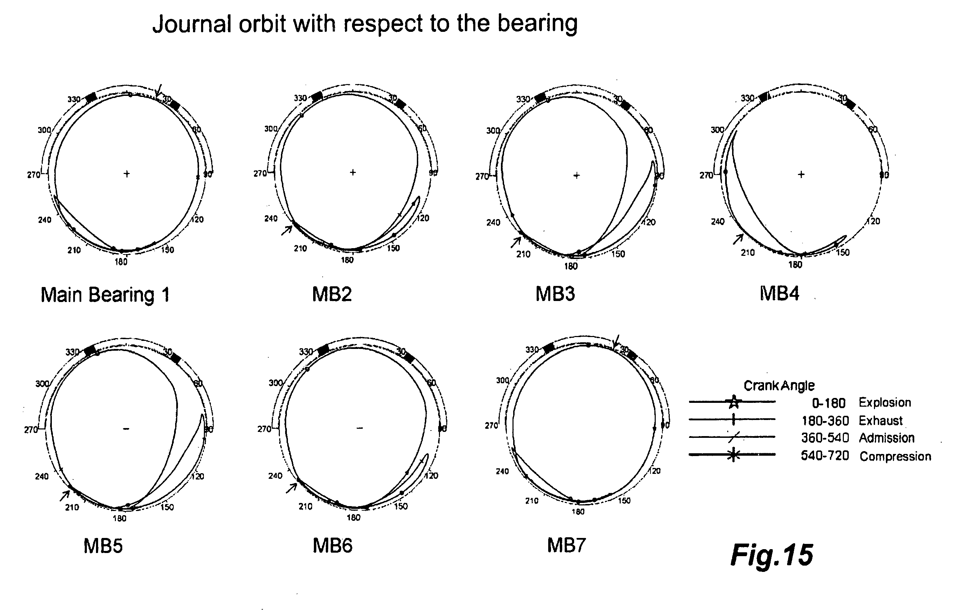

As can be seen in figures 4 and 15, the crankshaft movement in the hydrodynamic bearing 1 of the present invention produces a profile 200 (inside diameter) and its shape changes in comparison to a conventional bearing bore shape (circular profile) 100, before the wear of the sliding material, increasing the volume/space between the first oil contact portion 3 and the shaft with consequent reduction in the oil pressure.

Figure 4 and 15 still show that the profile 200 comprises an asymmetric bore shape due to the crankshaft movement. This asymmetric bore shape can be assumed as an elliptical shape, for example, after the wear of the sliding material, and its format depends upon the specific operation characteristics of the engine thus equipped.

Figure 3 shows a schematic view of the hydrodynamic bearing 1 in the form of a con rod bearing, and more particularly, the oil contact portion 3. After research tests and simulations, the wear profile for the hydrodynamic bearing of the present invention has been known and is thus illustrated.

Even with regard to the teachings of the present invention, the already mentioned figure 5 shows that the proposed roughness to the sliding material takes into account not only the depth, but also the pitch (average distance between two peaks).

The pitch value has to be defined based on the manufacturing feasibility. Preferably, in the present invention, the average roughness value comprises a groove pitch range from 0.238 to 0.3 mm, even though this value can be projected in a range from 0.1 to 0.5 mm or still in other ranges.

On figure 6, it is possible to compare the peak oil pressure A achieved by the hydrodynamic bearings 1 of the prior art (conventional bearing bore) and the peak oil pressure B produced by the hydrodynamic bearing 1 of the present invention, which is considerably reduced. Figure 6 shows results obtained from a simulation model.

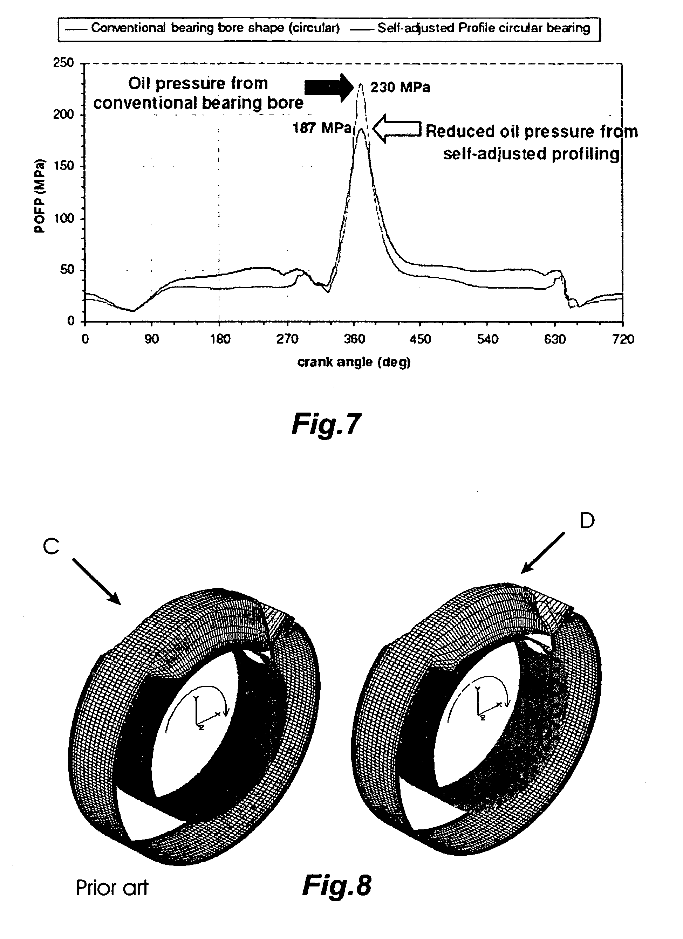

Figure 7 shows a graph where the values of the oil pressure in the internal surface 2 of the bearing 1 of the present invention, vis-à-vis with a prior art bearing, can be seen in details. The graph clearly shows the lower of oil pressure values of the bearing of the present invention, mainly in the oil contact portion 3.

This reduced oil pressure increases the advantages of the use of high loaded engines equiped with the bearing 1 of the present invention.

It is worth emphasizing that, during the operation of the engine, the oil contact portion 3 suffers a high pressure mostly due the explosion strokes and, during the explosion, the oil film thickness is the lowest of all, that is to say, the oil pressure is the highest. Hence, as a result, the higher the engine is loaded, the higher is the advantage of the present invention due to its capacity of reducing the oil film pressure and consequently the stress suffered by the bearing.

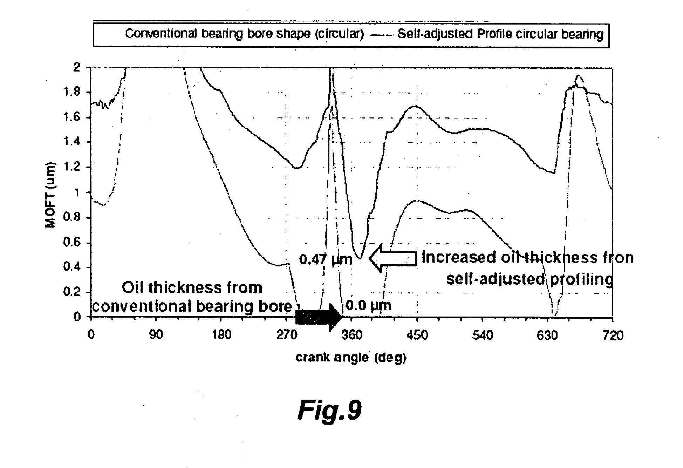

Similarly, figures 8 and 9 show the increased oil-film thickness D from self-adjusted profiling when compared to the oil-film thickness C of the current art. As can be seen in figure 9, for example, the use of the present hydrodynamic bearing 1 with a higher roughness allows a significant increase of oil-film thickness when compared to oil thickness obtained with the use of prior art bearings (a value around 0.47 µm), generating a corresponding reduction in oil pressure as mentioned above.

In order to validate the present invention, a simulation model has been implemented using the hydrodynamic bearing 1 according to the roughness values and characteristics as described in the present invention. Preferably, the roughness values selected in the present approach must be greater than 8 µm.

As already mentioned, usually the average maximum roughness value comprises a range from 8 µm to 30 µm, the higher ones preferably applicable in big/high displacement engines. Some preferred embodiments of the bearing 1 of the preferred invention, ideal for use on medium displacement engines, has maximum roughness value between 9 µm to 15 µm.

For experimental purposes, a Diesel-cycle 6-cylinder internal combustion engine has been object of a first serie of tests, equipped with the hydrodynamic bearing 1 of the present invention in the embodiment of a con rod bearing. The mechanical behavior of the hydrodynamic bearing 1 after said test, especially the thickness and the wear, has been evaluated for two ranges of average maximum roughness value (Rz) (ranges between 9 µ*m* to 12 µ*m* and between 12 µ*m* to 15 µ*m*).

On the mentioned test, the first range of roughness has been adjusted between 9 µ*m* and 12 µ*m* for three hydrodynamic bearings (bearings 1, 3 and 5) and the second range has been adjusted between 12 µ*m* and 15 µ*m* for other three hydrodynamic bearings (bearings 2, 4 and 6).

The results obtained from test, considering both ranges of roughness, are shown in table I as follows.

**Table I: Average maximum roughness values (Rz) after test**

| **Roughness (Rz)** | | | | | | | | | |
|---|---|---|---|---|---|---|---|---|---|
| **Before** | | | | **After** | | | **Difference** | | |
| | 0 | 45 | **315** | 0 | 45 | **315** | 0 | 45 | **315** |
| Bearing1 | 9,830 | 9,670 | **10,160** | 8,970 | 5,250 | **2,840** | 0,860 | 4,420 | **7,320** |
| Bearing3 | 9,760 | 9,840 | **10,170** | 9,560 | 5,580 | **3,260** | 0,200 | 4,260 | **6,910** |
| Bearing5 | 9,730 | 9,680 | **10,080** | 9,420 | 5,630 | **3,430** | 0,310 | 4,050 | **6,650** |
| Bearing2 | 12,780 | 12,580 | **11,700** | 7,730 | 5,750 | **3,110** | 5,050 | 6,830 | **8,590** |
| Bearing4 | 12,230 | 12,580 | **12,630** | 9,300 | 4,900 | **2,620** | 2,930 | 7,680 | **10,010** |
| Bearing6 | 12,150 | 12,580 | **12,630** | 9,900 | 5,100 | **2,620** | 2,250 | 6,800 | **10,080** |

As can be seen in table 1 above, the simulation results have shown the high wear of the sliding material due to the piston movement, mainly in the oil contact portion 3 (angle of 315 degree - see figures 3 and 4).

Especially in the oil contact portion 3, the sliding material achieves an average wear around 70% in the position of maximum load, that is to say, considering the angle of 315 degrees (the results are dotted for prompt reference).

Still with regard to table 1, it is possible to observe the higher wear of the sliding material at 315 degrees, mainly when compared to portions located in the 0 or 45 degrees.

The results still show that the wear of the sliding bearing is higher for hydrodynamic bearings composed by a higher roughness (Rz), therefore bearings 2,4 and 6 (roughness between 12 µm and 15 µm) are able to accommodate a crankshaft faster than bearings 1,3 and 5 (roughness between 9 µm and 12 µm), due to the higher and faster reduction in their roughness.

However, it is important to note that values of roughness higher than 30 µm can cause mechanical problems related to an undesirable accelerated wear for most engines, since it will increase enormously the metal-to-metal contact generating a vast amount of heat that can cause the seizure of the bearings.

Other roughness parameter can be highlighted by simulation results in order to describe better the present invention. The average roughness value (Ra), also called by arithmetical mean roughness, shows the same behavior of the sliding material wear when compared to the roughness value (Rz), for the same tests performed.

**Table II: Average roughness values (Ra) after test**

| **Roughness (Ra)** | | | | | | | | | |
|---|---|---|---|---|---|---|---|---|---|
| **Before** | | | | **After** | | | **Difference** | | |
| | 0 | 45 | **315** | 0 | 45 | **315** | 0 | 45 | **315** |
| **Bearing1** | 2,570 | 2,550 | **2,520** | 2,310 | 1,780 | **0,870** | 0,260 | 0,770 | **1,650** |
| **Bearing3** | 2,530 | 2,550 | **2,550** | 2,420 | 1,840 | **0,890** | 0,110 | 0,710 | **1,660** |
| **Bearing5** | 2,480 | 2,510 | **2,590** | 2,360 | 1,860 | **1,050** | 0,120 | 0,650 | **1,540** |
| **Bearing2** | 3,170 | 3,230 | **3,040** | 2,580 | 1,980 | **0,650** | 0,590 | 1,250 | **2,390** |
| **Bearing4** | 3,210 | 3,180 | **3,240** | 2,820 | 1,610 | **0,630** | 0,390 | 1,570 | **2,610** |
| **Bearing6** | 3,220 | 3,130 | **3,230** | 2,990 | 1,700 | **0,630** | 0,230 | 1,430 | **2,600** |

As can be seen in table II, the parameter of an average roughness (Ra) also show the accelerated wear of the sliding material related to the hydrodynamic bearing of the present invention, mostly at 315 degrees, when compared to portion located in the 0 or 45 degrees.

The table II also proofs that the wear of the sliding bearing is higher for hydrodynamic bearings composed by a higher roughness (Rz), therefore bearings 2,4 and 6 (roughness between 12 µm and 15 µm) are able to accommodate a crankshaft faster than bearings 1,3 and 5 (roughness between 9 µm and 12 µm) due to the higher reduction in their roughness.

Due to the fast decline in the oil pressure caused by the accelerated wear of the first oil contact portion 3, the present invention enables the use of less resistant, and therefore cheaper, bearings (i.e. bimetallic bearings) without reduction of the useful life on the IC engine thus equipped, or otherwise the increase in the useful life of a bearing able to support the constant stress of a high oil pressure, in both situation accommodating of the shaft in the internal surface of the bearing and optimizing the operation of the engine.

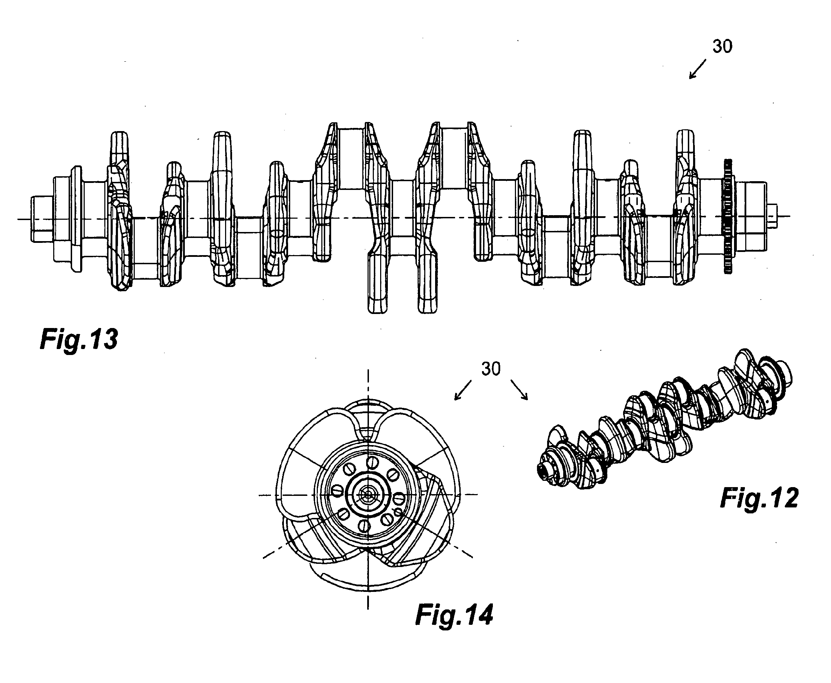

The same Diesel-cycle 6-cylinder internal combustion engine has been object of a second serie of tests, equipped with the hydrodynamic bearing 1 of the present invention in the embodiment of a crankshaft bearing. The crankshaft of this engine has 7 main bearings (see figures 12 and 13) The mechanical behavior of the hydrodynamic bearing 1 after said test, especially the thickness and the wear, has been evaluated for two ranges of average maximum roughness value (Rz) (ranges between 9 µm to 12 µm and between 12 µm to 15 µm).

**Table III: Average roughness values (Ra) after test**

| | | | **Main bearing 1** | | | **Main bearing 2** | | | **Main bearing 3** | | |
|---|---|---|---|---|---|---|---|---|---|---|---|
| | | | Ø 86.00 x 21.55 mm | | | Ø 86.00 x 21.55 mm | | | Ø 86.00 x 21.55 mm | | |
| | | | Ø Clear 95.50 µm | | | Ø Clear 95.50 µm | | | Ø Clear 95.50 µm | | |
| | | | **1** | **2** | | **1** | **2** | | **1** | **2** | |
| | | | Max Torque | Max Power | | Max Torque | Max Power | | Max Torque | Max Power | |
| Rotational Speed | (rev/mm) | | 1200 | 2500 | | 1200 | 2500 | | 1200 | 2500 | |
| Peripheral Speed | (m/s) | | 5.40 | 11.26 | | 5.40 | 11.26 | | 5.40 | 11.26 | |
| Unit Load | (MPa) | | 57.30 | 57.30 | | 57.30 | 57.30 | | 57.30 | 57.30 | |
| Maximum Specific Load | (MPa) | Upper | 1.21 | 7.64 | | 0.00 | 6.20 | | 0.00 | 7.15 | |
| | (MPa) | Lower | 41.60 | 36.88 | | 43.39 | 42.74 | | 42.97 | 40.99 | |
| Peak Oil Film Pressure | (MPa) | Upper | 9.23 | 85.64 | | 0.00 | 62.26 | | 0.00 | 74.77 | |
| | (MPa) | Lower | 452.97 | 313.72 | | 487.63 | 410.29 | | 479.62 | 381.18 | |
| Minimum Oil Film | (µm) | Upper | 1.88 | 0.74 | | 86.18 | 0.95 | | 87.86 | 0.88 | |
| | (µm) | Lower | 0.75 | 1.16 | | 0.70 | 0.78 | | 0.71 | 0.76 | |
| Global P.V. | (MPa.m/s) | | 25.6 | 76.6 | | 48.1 | 121.6 | | 48.4 | 125.7 | |
| DCR Severity | (MPa.m/s) | Total | 0.601 | 1.812 | | 1.823 | 3.029 | | 1.859 | 3.504 | |
| | (MPa.m/s) | Upper | 0.001 | 1.256 | | 0.000 | 0.446 | | 0.000 | 0.813 | |
| | (MPa.m/s) | Lower | 0.600 | 0.555 | | 1.823 | 2.582 | | 1.859 | 2.690 | |
| Oil Flow | (m/s) | | 87.935 | 87.964 | | 104.288 | 96.153 | | 104.762 | 95.727 | |
| Power Loss | (W) | | 83.4 | 331.7 | | 142.5 | 394.4 | | 143.9 | 422.3 | |
| Oil Viscosity | (cP) | | 5.215 | 5.067 | | 5.189 | 5.043 | | 5.188 | 5.027 | |
| Operating Temperature | (°C) | | 130.7 | 132.4 | | 131.0 | 132.8 | | 131.0 | 133.0 | |

| **Main bearing 4** | | | **Main bearing 5** | | | **Main bearing 6** | | | **Main bearing 7** | | |
|---|---|---|---|---|---|---|---|---|---|---|---|
| Ø 86.00 x 21.55 mm | | | Ø 86.00 x 21.55 mm | | | Ø 86.00 x 21.55 mm | | | Ø 86.00 x 21.55 mm | | |
| Ø Clear 95.50 µm | | | Ø Clear 95.50 µm | | | Ø Clear 95.50 µm | | | Ø Clear 95.50 µm | | |
| **1** | **2** | | **1** | **2** | | **1** | **2** | | **1** | **2** | |
| Max Torque | Max Power | | Max Torque | Max Power | | Max Torque | Max Power | | Max Torque | Max Power | |
| 1200 | 2500 | | 1200 | 2500 | | 1200 | 2500 | | 1200 | 2500 | |
| 5.40 | 11.26 | | 5.40 | 11.26 | | 5.40 | 11.26 | | 5.40 | 11.26 | |
| 57.30 | 57.30 | | 57.30 | 57.30 | | 57.30 | 57.30 | | 57.30 | 57.30 | |
| 0.00 | 6.31 | | 0.00 | 7.15 | | 0.00 | 6.17 | | 1.18 | 7.50 | |
| 40.85 | 31.43 | | 42.97 | 40.99 | | 43.38 | 42.71 | | 41.62 | 36.98 | |
| 0.00 | 51.46 | | 0.00 | 74.77 | | 0.00 | 61.82 | | 8.87 | 84.32 | |
| 440.93 | 244.92 | | 479.62 | 381.18 | | 487.49 | 409.87 | | 453.38 | 315.14 | |
| 91.90 | 1.60 | | 87.86 | 0.88 | | 86.26 | 0.96 | | 1.91 | 0.76 | |
| 0.77 | 0.70 | | 0.71 | 0.76 | | 0.70 | 0.78 | | 0.75 | 1.18 | |
| 48.9 | 121.1 | | 48.4 | 125.7 | | 48.1 | 121.4 | | 25.5 | 75.8 | |
| 1.940 | 5.072 | | 1.859 | 3.503 | | 1.815 | 2.997 | | 4.595 | 1.716 | |
| 0.000 | 0.013 | | 0.000 | 0.813 | | 0.000 | 0.443 | | 0.001 | 1.181 | |
| 1.940 | 5.058 | | 1.859 | 2.690 | | 1.815 | 2.554 | | 0.594 | 0.535 | |
| 106.444 | 107.032 | | 104.764 | 95.128 | | 104.306 | 96.196 | | 87.967 | 87.975 | |
| 150.2 | 489.5 | | 143.9 | 422.3 | | 142.1 | 392.9 | | 82.9 | 327.1 | |
| 5.186 | 5.018 | | 5.188 | 5.027 | | 5.189 | 5.043 | | 5.215 | 5.070 | |
| 131.0 | 133.1 | | 131.0 | 133.0 | | 131.0 | 132.7 | | 130.7 | 132.4 | |

As another advantages, the concept of higher roughness enables the production of perfectly circular bearings. The bearings now in productions are in fact non circular, but have two or more bend radius, necessary to enable the correct assembly and operation of the component, including in the aspects concerning the maintenance of a correct oil film. The necessity of conforming the bearing with two or more bend radius increases its manufacturing costs.

If using the concept of the present invention, the crankshaft will wear the internal surface 2, thereby forming a profile with two or more bend radius, that is to say, the bearing 1 can be perfectly circular and will be self adjusted with respect to the eccentricity and relieves.

Identically, the bearing 1 will be self adjusted, forming the better profile when the rod ovalizes, which occurs mostly in situation of high revs of the engine. In this particular situation, and in others, due to the ovalization of the bearing, the first oil contact portion 3 displaces with respect to the situation illustrated in the figures (i.e, it does not corresponds to the angle of 315 degree of the bearing 1), but occurs in an adjacent region of the bearing.

An engine block having at least one main bearing and one cap bearing equipped with at least one hydrodynamic bearing according to the present invention is also a new and inventive invention, and are also included in the scope of protection of the accompanied claims.

Finally, a connecting rod having at least one hydrodynamic bearing according to the present invention and an IC engine having at least one hydrodynamic bearing according to the present invention are also a new and inventive invention, and are also included in the scope of protection of the accompanied claims.

Some preferred embodiments having been described, it should be understood that the scope of the present invention embraces other possible variations, being limited only by the contents of the accompanying claims, which include the possible equivalents.

## Claims

1. Assembly of a hydrodynamic bearing (1, 11) and a shaft rotationally received in the hydrodynamic bearing (1, 11), for an internal combustion engine, wherein the assembly comprises a lubricant oil, wherein the hydrodynamic bearing (1, 11) comprises an internal surface (2), the internal surface (2) comprising a first oil contact portion (3) established to suffer a first compression load during engine operation, the internal surface (2) comprising a second oil contact portion (5) established to suffer a second compression load substantially lower than the first compression load during engine operation, wherein the internal surface (2) is composed of a sliding material, said sliding material having a mean roughness depth value Rz between 12 µm and 30 µm, causing an accelerated wear of the sliding material in the first contact portion (3) wherein the mean roughness depth value Rz comprises a groove pitch range from 0.1 mm to 0.5 mm, **characterized in that** the hydrodynamic bearing (1, 11) is a bimetallic bearing composed of a steel layer, an intermediate layer of pure aluminium and a third layer of an alloy forming the internal surface (2).

2. Assembly according to claim 1, **characterized in that** the mean roughness depth value Rz is between 12 µm and 15 µm.

3. Assembly according to claim 1, **characterized in that** the mean roughness depth value Rz comprises a groove pitch range from 0.238 mm to 0.3 mm.

4. Engine block comprising an assembly according to claim 1, **characterized in that** the hydrodynamic bearing (11) is received in a main bearing of the engine block and that the shaft received in the hydrodynamic bearing (11) is a crankshaft.

5. Connecting rod comprising an assembly according to claim 1, **characterized in that** the hydrodynamic bearing (1) is received in the large eye of the connecting rod and that the shaft received in the hydrodynamic bearing (1) is a crankshaft.

## Patentansprüche

1. Baugruppe aus einem hydrodynamischen Lager (1, 11) und einer Welle, die drehfähig in dem hydrodynamischen Lager (1, 11) aufgenommen ist, für einen Verbrennungsmotor, wobei die Baugruppe ein Schmieröl aufweist, wobei das hydrodynamische Lager (1, 11) eine Innenfläche (2) aufweist, wobei die Innenfläche (2) einen ersten Ölkontaktabschnitt (3) aufweist, der dafür ausgelegt ist, während des Motorbetriebs eine erste Kompressionslast aufzunehmen, wobei die Innenfläche (2) einen zweiten Ölkontaktabschnitt (5) aufweist, der dafür ausgelegt ist, während des Motorbetriebs eine zweite Kompressionslast aufzunehmen, die wesentlich niedriger ist als die erste Kompressionslast, wobei die Innenfläche (2) aus einem gleitfähigen Material besteht, wobei das gleitfähige Material einen mittleren Rauigkeitstiefenwert Rz zwischen 12 µm und 30 µm aufweist, was einen beschleunigten Verschleiß des gleitfähigen Materials im ersten Ölkontaktabschnitt (3) bewirkt, wobei der mittlere Rauigkeitstiefenwert Rz einen Kerbabstandsbereich von 0,1 mm bis 0,5 mm aufweist,
**dadurch gekennzeichnet, dass** das hydrodynamische Lager (1, 11) ein bimetallisches Lager ist, das aus einer Stahlschicht, einer Zwischenschicht aus reinem Aluminium und einer dritten Schicht aus einer Legierung, die die Innenfläche (2) bildet, zusammengesetzt ist.

2. Baugruppe nach Anspruch 1, **dadurch gekennzeichnet, dass** der mittlere Rauigkeitstiefenwert Rz zwischen 12 µm und 15 µm liegt.

3. Baugruppe nach Anspruch 1, **dadurch gekennzeichnet, dass** der mittlere Rauigkeitstiefenwert Rz einen Kerbabstandsbereich von 0,238 mm bis 0,3 mm aufweist.

4. Motorblock, eine Baugruppe nach Anspruch 1 aufweisend, **dadurch gekennzeichnet, dass** das hydrodynamische Lager (11) in einem Hauptlager des Motorblocks aufgenommen ist und dass die Welle, die in dem hydrodynamischen Lager (11) aufgenommen ist, eine Kurbelwelle ist.

5. Pleuel, eine Baugruppe nach Anspruch 1 aufweisend, **dadurch gekennzeichnet, dass** das hydrodynamische Lager (1) in der großen Öse des Pleuels aufgenommen ist und dass die Welle, die in dem hydrodynamischen Lager (1) aufgenommen ist, eine Kurbelwelle ist.

## Revendications

1. Ensemble composé d'un palier hydrodynamique (1, 11) et d'un arbre reçu de façon rotative dans le palier hydrodynamique (1, 11), pour un moteur à combustion interne, dans lequel l'ensemble comprend une huile lubrifiante, dans lequel le palier hydrodynamique (1, 11) comprend une surface intérieure (2), la surface intérieure (2) comprenant une première partie de contact avec l'huile (3) conçue pour supporter une première charge de compression pendant le fonctionnement du moteur, la surface intérieure (2) comprenant une deuxième partie de contact avec l'huile (5) conçue pour supporter une deuxième charge de compression substantiellement inférieure à la première charge de compression pendant le fonctionnement du moteur, dans lequel la surface intérieure (2) est constituée d'un matériau glissant, ledit matériau glissant présentant une valeur moyenne de profondeur de rugosité Rz comprise entre 12 µm et 30 µm, causant une usure accélérée du matériau glissant dans la première partie de contact avec l'huile (3), la valeur moyenne de la profondeur de rugosité Rz comprenant un pas de rainure comprise entre 0,1 mm et 0,5 mm, **caractérisé en ce que** le palier hydrodynamique (1, 11) est un palier bimétallique constitué d'une couche d'acier, d'une couche intermédiaire d'aluminium pur et d'une troisième couche d'un alliage formant la surface intérieure (2).

2. Ensemble selon la revendication 1, **caractérisé en ce que** la valeur moyenne de la profondeur de rugosité Rz est comprise entre 12 µm et 15 µm.

3. Ensemble selon la revendication 1, **caractérisé en ce que** la valeur moyenne de la profondeur de rugosité Rz est comprise entre 0,238 mm et 0,3 mm.

4. Bloc moteur comprenant un ensemble selon la revendication 1, **caractérisé en ce que** le palier hydrodynamique (11) est reçu dans un palier principal du bloc moteur, et **en ce que** l'arbre reçu dans le palier hydrodynamique (11) est un vilebrequin.

5. Tige de connexion comprenant un ensemble selon la revendication 1, **caractérisé en ce que** le palier hydrodynamique (1) est reçu dans le grand oeil de la tige de connexion, et **en ce que** l'arbre reçu dans le palier hydrodynamique (1) est un vilebrequin.
